# EUROPEAN PATENT APPLICATION

(11) **EP 4 819 383 A1**
(43) Date of publication of application: **07.10.2026**
(21) Application number: 25168043.5
(22) Date of filing: 02.04.2025
(51) Int. Cl.: H01Q 1/28, B64C 1/36, H01Q 1/42, H01Q 1/02, H01Q 1/52

(54) **MODULAR ANTENNA ARRANGEMENT**

(71) Applicant: AIRBUS Operations GmbH, 21129 Hamburg (DE); Airbus (S.A.S.), 31700 Blagnac (FR)
(72) Inventor: Schaupmann, Christian, 21129 Hamburg (DE); Wang, Chenhao Theo, 31700 Blagnac (FR)
(74) Representative: Bird & Bird LLP - Hamburg

(57) **Abstract**

Set (1) for a modular antenna arrangement (2) for an aircraft (50), comprising a base module (10) for connecting at least one plate shaped antenna element (20a, 20b) with a fuselage (51) of the aircraft (50), wherein the base module (10) has a bottom surface (11) mechanically connectable with the fuselage (51) of the aircraft (50) and a top surface (12) comprising at least one accommodation recess (13a, 13b) for accommodating, at least partially, the at least one plate shaped antenna element (20a, 20b); at least one interchangeable antenna adapter module (30a, 30b) connectable to the base module (10) and the at least one plate shaped antenna element (20a, 20b), wherein the interchangeable antenna adapter module (30a, 30b) is configured to be arranged in the accommodation recess (13a, 13b) between a bottom (14a, 14b) of the accommodation recess (13a, 13b) and the plate shaped antenna element (20a, 20b); and a cover module (40) configured for at least partially covering the base module (10), wherein the cover module (40) comprises at least one opening (41a, 41b), wherein an opening cross-section of the at least one opening (41a, 41b) is adapted to a cross-section of the at least one plate shaped antenna element (20a, 20b).

## Description

The present invention relates to a set for a modular antenna arrangement for an aircraft. Further aspects of the invention relate to a method for assembling a set for a modular antenna arrangement, an aircraft component comprising such a set for a modular antenna arrangement, and an aircraft comprising such a set for a modular antenna arrangement and/or aircraft component.

Aircrafts typically have one or more antennas, by means of which radio communication can be established between the aircraft and external devices or traffic on the ground or in the air, e.g. other aircrafts or satellites.

Conventional parts for mounting one or more antennas on a fuselage of an aircraft, in particular the antenna mounting base module and the antenna cover, are customized or tailored for each specific antenna(s). In other words, the intended space for including a specific antenna in the conventional parts for mounting one or more antennas on a fuselage, in particular the antenna mounting base module and the antenna cover, is dimensioned in such a manner that only this specific antenna can be accommodated or arranged in this space. Therefore, integration of a new antenna type or replacement of an antenna by another antenna type can be highly complicated because the conventional parts for mounting a specific antenna on a fuselage, in the particular antenna mounting base module and the antenna cover, have to dismantled and replaced by other parts, in particular another antenna mounting base module and another antenna cover, for mounting another specific antenna. This often requires intense structural modifications or adjustments to the aircraft, in particular to the aircraft fuselage, and/or to the parts for mounting one or more antennas, in particular the antenna mounting base module and the antenna cover, itself. This usually increases the amount of work, the needed work time, and the costs for integrating new antennas or replacing existing ones. Additionally, since most parts for mounting antennas to an aircraft are solely customized for a specific antenna of a specific provider, a compatibility of such parts for use with antennas of other providers is non-existent or very limited. Further, said modifications or adjustments to the fuselage usually come along with additional testing or safety-related inspections to get approval for the individual integration of the antenna type into the aircraft fuselage. This is usually carried out by government or testing organizations in order to obtain certification and approval for the aircraft. This further increases the costs and the time required for integrating new antenna types. Exemplary embodiments of conventional antenna arrangements that have such problems are antenna arrangements including a radome because these antenna arrangements are usually only customized for a single specific antenna.

It can be seen as an object of the invention to overcome, at least in part, the drawbacks mentioned above. Particularly, the invention can contribute to decrease the amount of work, the necessary wort time and/or the costs for integrating new antenna types and/or replacing existing ones with new antenna types in connection with providing antenna arrangements for aircrafts.

In one aspect of the invention, a set for a modular antenna arrangement for an aircraft is presented. The set for a modular antenna arrangement for an aircraft comprises a base module for connecting at least one plate shaped antenna element with a fuselage of the aircraft. The base module has a bottom surface mechanically connectable with the fuselage of the aircraft and a top surface comprising at least one accommodation recess for accommodating, at least partially, the at least one plate shaped antenna element. The set for a modular antenna arrangement for an aircraft, further comprises at least one interchangeable antenna adapter module connectable to the base module and the at least one plate shaped antenna element. The interchangeable antenna adapter module is configured to be arranged in the accommodation recess between a bottom of the accommodation recess and the plate shaped antenna element. The set for a modular antenna arrangement for an aircraft, further comprises a cover module configured for at least partially covering the base module. The cover module comprises at least one opening, wherein an opening cross-section of the at least one opening is adapted to a cross-section of the at least one plate shaped antenna element.

The present invention may provide a modular set that can act as an adapter for a plurality of different antenna systems, in particular different types of antennas. In other words, the set that can act as an adapter to which a plurality of different antennas and/or types of antennas are compatible and connectable. The base module can act as common base module for a plurality of different antennas and/or types of antennas. The set can be adapted to a specific antenna element and/or specific type of plate shaped antenna by changing the antenna adapter module. The antenna adapter module is usually adapted to the plate shaped antenna element which is to be connected via the base module to the aircraft fuselage. Since the interchangeable antenna adapter module is (always) connectable or couplable to the base module which can act as a common or standardized mounting base (plate) for mounting at least one antenna to the fuselage of an aircraft, an integration of a new antenna type or replacement of an existing antenna type can be simplified because structural modifications or adjustments to the aircraft and/or the parts directly mounted to the fuselage of the aircraft can be significantly reduced or completely avoided in this regard. In particular, even for an existing aircraft fuselage, a modification for allowing integration of new antennas could advantageously be required only once, namely for integration of the base module. Due to the simplified integration of a new antenna type or replacement of an existing antenna type, the necessary working time for an integration or replacement of an antenna type can be significantly reduced. Advantageously, in case an aircraft is equipped with a base module according to the herein described set, it can be possible to integrate a new antenna type or to replace an existing antenna type in a so-called overnight swap, i.e. a swap taking less than eight hours. Particularly, this can be achieved by only swapping the interchangeable antenna adapter module carrying the old antenna element with a new interchangeable antenna adapter module carrying a new antenna element, by swapping the antenna element already mounted to the interchangeable antenna adapter module with the new antenna type or by including the new antenna type together with an interchangeable antenna adapter module into an open accommodation recess of the base module.

Additionally, by using the interchangeable antenna adapter module, an increased compatibility to antenna elements being manufactured by other antenna providers can also be provided. Further, the use of the interchangeable antenna adapter module can make it easier and cheaper for users like airlines to adapt or exchange the antennas with the set of a modular antenna arrangement to their own needs. In addition, since the shape of the base module is independent of which antenna element or interchangeable antenna adapter module is used, advantageously, the costly and time-consuming safety-related inspections have to be carried out only once by the government or the testing organizations in order to obtain certification and approval for integration of the base module into or onto the aircraft fuselage. This can further decrease the costs and the time required for adjustments to the antenna arrangement of an aircraft in an advantageous manner.

The set can be a mounting set. In particular, the set can be a modular mounting set for mounting different types of plate shaped antenna elements to a fuselage of an aircraft.

The base module can be a module configured for connecting, in particular mechanically connecting or coupling, at least one plate shaped antenna element with a fuselage of an aircraft. The base module can be a common or universal, particularly a standardized base module. The base module can be a module configured for providing a common or universal mounting platform for different antenna systems and/or different (plate shaped) antenna types. In particular, the base module can comprise or consist of a common or universal mounting element or holding element, particularly in the form of a mounting plate, with which at least one interchangeable antenna adapter module carrying or including at least one plate shaped antenna element can be mounted, attached, connected or coupled to the fuselage of an aircraft. In this context, the term "different antenna systems" can represent different antenna types or different types of (plate shaped) antenna elements. Different antenna types or different antenna elements can, e.g. differ in the capability to provide connectivity do different service providers (such as, e.g., communication providers, localization providers, in-flight-entertainment providers and the like).

The base module usually comprises a bottom surface, a top surface and at least one sidewall. The bottom surface of the base module can represent the surface of the base module facing the fuselage, in particular the outer surface of the fuselage, of an aircraft. The bottom surface of the base module can be mechanically connectable with the fuselage. In this context, the bottom surface of the base module can be in direct contact with the fuselage, in particular the outer surface of the fuselage. Alternatively, the bottom surface of the base module can be neighboured or in indirect contact with the fuselage. For instance, in case the bottom surface of the base module and the fuselage are in indirect contact, at least one mounting adapter can be arranged between the bottom surface of the base module and the fuselage but is not limited thereto. The mounting adapter can include a set of fixing means for fixing the base module on the fuselage. The mounting adapter can further contribute to the adaptability of the set and/or the universal usability of the base module. In particular, the mounting adapter can increase the adaptability of the base module to different fuselage configurations. Furthermore, the mounting adapter can also include a sealing means for sealing a space between the base module and the outer fuselage. The bottom surface of the base module can be fully or partially parallel to the fuselage.

The top surface of the base module can represent the surface of the base module being spaced apart and facing away from the bottom surface of the base module. The top surface can, at least in part, be parallel to the bottom surface of the base module. The top surface may be fully or partially parallel to the fuselage, in particular the outer surface of the fuselage. This can, e.g., at least be true for longitudinal centre lines of the respective surfaces. The top surface can, at least in part, have a flat shape or lie within a flat plane. The top surface can be fully or partially in direct contact with a lower surface of the cover module. The top surface of the base module can be fully or partially covered by the cover module. In case the base module is partially covered by the cover module, the level of coverage, i.e. the area ratio of an area of the cover module, in particular the lower surface of the cover module, to an area of the base module, in particular the top surface of the base module, can be in a range of 80 to 98%, preferably about 95%.

The at least one sidewall can be a wall of the base module physically connecting the bottom surface and the top surface. The at least one sidewall can comprise a continuous or non-continuous shape in vertical cross-section. In case the at least one sidewall comprises a continuous shape, the at least one sidewall can extend continuously perpendicular, rounded with an arc in the range of 1° to 45°, or inclined with an angle in the range of 1° to 89° from the bottom surface to the top surface but is not limited thereto. Alternatively, in case the at least one sidewall comprises a non-continuous shape, the at least one sidewall can be divided into at least two vertical extending sidewall sections. The at least two vertical extending sidewall sections can be different to each other in shape, i.e. perpendicular, rounded or inclined extension, and/or may be identical or different to each other in vertical size, i.e. height. For instance, in case the at least two vertical extending sidewall sections represent two sidewall sections being arranged one above the other, the height of the sidewall section contacting the bottom surface of the base module may be larger than, smaller than or equal to the height of the sidewall section contacting the top surface of the base module. Additionally, the used shape of the sidewall or the at least two vertical extending sidewall sections can differ depending on whether a horizontal portion of the sidewall or the sidewall sections are aligned in the direction of flight of the aircraft (i.e. the leading edge), parallel to the direction of flight of the aircraft or against the direction of flight of the aircraft. Alternatively, all horizontal portions of the at least one sidewall or of the at least two sidewall sections can be identical to each other. For instance, when a horizontal portion of the sidewall is aligned in the direction of flight of the aircraft, this horizontal portion of the sidewall may consist of two vertical extending sidewall sections, wherein both vertical extending sidewall sections have the same vertical size. One of the two vertical extending sidewall sections, in particular the sidewall section contacting the bottom surface of the base module, extends perpendicular. The other vertical extending sidewall section, in particular the sidewall section contacting the top surface of the base module, extends continuously inclined with an angle of approximately 45°. Additionally, when the horizontal portions of the sidewall are parallel to and/or being against the direction of flight of the aircraft, these horizontal portions of the sidewall consist of a continuous shape, in particular is continuously rounded with an arc of approximately 45°. The at least one sidewall of the base module can be shaped in such a manner to provide a streamline shape and to reduce the air resistance but is not limited thereto.

The base module can be free of any electronical component. Alternatively, the base module can comprise further electronical components. For instance, further electronical components can be a camera, laser-optics or sensors, in particular sensors measuring weather parameter, but is not limited thereto.

The base module can include or be made of aluminium, glass fibre or carbon fibre but is not limited thereto. Additionally, the used material for the base module can include a coating or ingredient having radio wave shielding properties. For instant, the coating or ingredient can be made of polypropylene or polyurethan. Alternatively or additionally, the base module can comprise at least one shielding element configured for shielding each of the at least one included plate shaped antenna elements from each other. Such shielding can provide that the transmitted and received radio waves of each one of the plate shaped antenna elements do not affect and/or interfere with each other or at least reduce such effects. The base module can be made of a single piece of material. For example, the base module can comprise or consist of a single body. Alternatively, the base module can comprise a housing or casing having disposed in the interior or volume thereof a filler material, longitudinal ribs, transverse ribs, a combination of longitudinal and transverse ribs and/or a comb structure but is not limited thereto. For instance, the filler material can be a syntactic foam but is not limited thereto. Summarized, the base module can be made of a material and/or structure having a high resistance to a deformation due to decompression. The used material and/or structure of the base module can be identical or different to the used material and/or structure of the cover module but is not limited thereto. The used material and/or structure of the base module can fulfil safety regulations regarding a protection against bird strikes, sand erosion, rain erosion and/or hail. Additionally, the used material and/or structure of the base module can fulfil safety regulations regarding a protection against lightning strikes. For instance, the base module can include at least one lightning capable grounding or bonding provision but is not limited thereto.

The base module can comprise at least one accommodation recess. The at least one accommodation recess can be configured for receiving or accommodating, at least partially, the at least one plate shaped antenna element. Alternatively or additionally, the at least one accommodation recess can be configured for receiving or accommodating only the interchangeable antenna adapter module carrying the at least one plate shaped antenna element or the whole interchangeable antenna adapter module together with a part of the at least one plate shaped antenna element but is not limited thereto. The at least one accommodation recess can be configured for receiving or accommodating different sizes of interchangeable antenna adapter modules and/or plate shaped antenna elements. The at least one accommodation recess can extend from the top surface of the base module in direction to the bottom surface of the base module. However, the at least one accommodation recess does usually not contact or is free of a contact with the bottom surface. The at least one accommodation recess can extend into the base module with a depth of 1% to 99%, preferably about 50%, of the height of the base module. The at least one accommodation recess can comprise a quadratic, circular, elliptic, rectangular, or polygonal (cross-sectional) shape but is not limited thereto. The at least one accommodation recess can comprise a bottom, in particular bottom surface. The bottom may be parallel to the bottom surface and/or the top surface of the base module but is not limited thereto. The at least one accommodation recess of the base module can be aligned with at least one opening of the cover module. In other words, the at least one accommodation recess can be only provided or located in regions of the top surface of the base module which are below the at least one opening of the cover module in a connected or mounted state (in which the cover module is connected to or mounted onto the base module). In case, the at least one accommodation recess can represent more than one accommodation recess, the plurality of accommodation recesses can be identical or different to each other in depth, length, width and/or (cross-sectional) shape. An area ratio of the area of the at least one accommodation recess, i.e. sum of the areas of the one or more accommodation recess, to the area of the top surface of the base module can be in the range of 20% to 80%, preferably about 50%.

The base module can comprise means for providing or allowing at least one power and/or data connection between the at least one plate shaped antenna element and the aircraft. For instance, the means for providing at least one power and/or data connection can be a power and/or data interface being arranged in or on the base module. Alternatively, the means for allowing at least one power and/or data connection between the at least one plate shaped antenna element and the aircraft can be a cable passage for providing, in particular enabling, a passage of a cable through the base module. For instance, the cable passage can be located at and/or end in the at least one accommodation recess. In other words, the cable passage can extend from a bottom surface of the base module to the bottom of the at least one accommodation recess. Alternatively, the cable passage can extend from a bottom surface of the base module to the top surface of the base module. The cable passage can be sealed to prevent e.g. water from entering the at least one accommodation recess in the connected or mounted state of the base module and the cover module. The sealing of the cable passage can be provided by arranging sealing elements into the cable passage, by using press coupling and/or by filling the cable passage with an adhesive but is not limited thereto. In case the base module comprises a plurality of accommodation recesses, each one of the plurality of accommodation recesses can comprise its own or a respective cable passage. Alternatively, in case the base module comprises a plurality of accommodation recesses, the base module can comprise a common cable passage extending to all of the plurality of accommodation recesses.

The base module can comprise a plurality of fastener-receiving formations, such as internal and/or external screw threads, for enabling a releasably or non-permanently mechanical connection or releasably mounting of the cover module and/or the interchangeable antenna adapter module to the base module.

The base module can be permanently or releasably, i.e. non-permanently, physically connected or mounted to the fuselage, in particular to stiffeners being arranged at an inner surface of the fuselage, by one or more fasteners. Stiffeners can be frames and/or stringers being arranged below the outer shell of the fuselage. A fastener can be a screw, a rivet or a bolt but is not limited thereto. The fasteners can be anchored (only) within the stiffeners in order to provide a sufficient mounting of the base module to the fuselage of the aircraft. When, the base module has an elongated shape in the direction of flight of the aircraft, the base module can intersect several, in particular a plurality of stiffeners, wherein the fasteners can be placed in regular intervals to fasten the base module to each one of the plurality of stiffeners being intersected. In this case, the attachment of the base module to the fuselage can fulfil the standards ARINC 792/791 but is not limited thereto.

The base module can comprise a plate shape. The base module usually comprises a length, width, and a height. A height-length ratio of the base module can be in the range of 1 to 15%, preferably about 5%. Additionally or alternatively, a height-width ratio of the base module can be in the range of 1 to 25%. The base module may comprise a quadratic, circular, elliptic, rectangular, or polygonal (cross-sectional) shape but is not limited thereto.

The base module can have a larger height than the height of the cover module. In other words, the ratio of a height of the cover module to the height of the base module can be in a range of 10 to 40%, preferably about 33%. The height ratio of the height of the base module to the sum of the height of the base module and the height of the cover module can be in a range of 51% to 99%, preferably about 66%.

The interchangeable antenna adapter module can be a module being connectable to the base module and to the at least one plate shaped antenna element. In other words, the at least one interchangeable antenna adapter module can be configured as an adapter or adapter means, in particular specific adapter, for connecting, holding, mounting, coupling or attaching the at least one plate shaped antenna element to the base module. Usually, a configuration of the base module is independent of the specific plate shaped antenna element to be mounted to the aircraft, whereas a configuration of the antenna adapter module depends on the specific plate shaped antenna element to be mounted to the aircraft. In particular, the interchangeable antenna adapter module can be configured for mechanically connecting the at least one plate shaped antenna element to the base module. It can be provided, but is not necessary, that the interchangeable antenna adapter module can be configured for electrically or electronically connecting the at least one plate shaped antenna element to the base module. In other words, it is not required that the interchangeable antenna adapter module provides a power or data connection. The interchangeable antenna adapter module can be adapted to the at least one plate shaped antenna element, in particular to the used antenna type of the at least one plate shaped antenna element. The interchangeable antenna adapter module can be adapted to the dimensions of the at least one plate shaped antenna element, in particular to the height and/or base area of the at least one plate shaped antenna element. A higher or thicker plate shaped antenna element can e.g. require a lower or thinner antenna adapter module. The interchangeable antenna adapter module can be provided together with the at least one plate shaped antenna element.

The interchangeable antenna adapter module can comprise a plate shape but is not limited thereto. The interchangeable antenna adapter module comprises a length, width, and a height. A height-length ratio of the interchangeable antenna adapter module can be in the range of 1 to 15%, preferably about 5%. Additionally or alternatively, a height-width ratio of the interchangeable antenna adapter module can be in the range of 1 to 25%. The interchangeable antenna adapter module, in particular the height of the interchangeable antenna adapter module, can be dimensioned such that the at least one plate shaped antenna element is flush with the upper surface of the cover module. Alternatively, the interchangeable antenna adapter module, in particular the height of the interchangeable antenna adapter module, can be dimensioned such that the at least one plate shaped antenna element is shifted to the inside, i.e. to the internal volume, of the opening of the cover module. The interchangeable antenna adapter module may comprise a quadratic, circular, elliptic, rectangular, or polygonal (cross-sectional) shape but is not limited thereto. The cross-sectional shape of the interchangeable antenna adapter module can be adapted to the cross-sectional shape of the at least one accommodation recess of the base module and vice versa.

The interchangeable antenna adapter module can usually comprise a top surface, a bottom surface and at least one sidewall. The top surface can represent the surface facing or being in direct contact with the at least one plate shaped antenna element. In other words, the top surface can represent the surface of the interchangeable antenna adapter module at which the at least one plate shaped antenna element is connected. In this context the at least one plate shaped antenna element can be mechanically and/or electrically connected to the interchangeable antenna adapter module. The top surface may be spaced apart and parallel to the bottom surface of the interchangeable antenna adapter module. The top surface can be fully or partially covered by the at least one plate shaped antenna element. A level of coverage, i.e. the area ratio of an area of the at least one antenna element to an area of the interchangeable antenna adapter module, can be in a range of 60 to 100%, preferably about 90%.

The interchangeable antenna adapter module can be configured for aligning the at least one plate shaped antenna element with regard to the base module and/or the aircraft fuselage. The top surface of the interchangeable antenna adapter module can comprise means for mechanically aligning the at least one plate shaped antenna element. The means for mechanically aligning the at least one plate shaped antenna element can represent a means configured for reducing or preventing a movement or a shifting of the at least one plate shaped antenna element during an assembling of the set for a modular antenna arrangement or during the use of the set of the modular antenna arrangement. Additionally, the means for mechanically aligning the at least one plate shaped antenna element can represent a means configured for fixed mounting or attaching the at least one plate shaped antenna element to the interchangeable antenna adapter module, in particular the top surface of the interchangeable antenna adapter module. For instance, the means for mechanically aligning the at least one plate shaped antenna element can be a frame or holding corners but is not limited thereto. The means for mechanically aligning the at least one plate shaped antenna element can define an antenna localization area on the top surface of the interchangeable antenna adapter module. The means for mechanically aligning the at least one plate shaped antenna element can be an integral part of the top surface of the interchangeable antenna adapter module or can be a separate part being mounted to the top surface of the interchangeable antenna adapter module. The at least one plate shaped antenna element can be permanently or releasably, i.e. non-permanently, physically connected or mounted to the interchangeable antenna adapter module. For instance, the at least one plate shaped antenna element can be permanently or releasably physically connected or mounted to the interchangeable antenna adapter module by screws, rivets or bolts but is not limited thereto.

The bottom surface of the interchangeable antenna adapter module can represent the surface of the interchangeable antenna adapter module being spaced apart from and being parallel to the top surface of the interchangeable antenna adapter module. The at least one sidewall can be a wall of the interchangeable antenna adapter module physically connecting the bottom surface and the top surface. The at least one sidewall can comprise a continuous or non-continuous shape in vertical cross-section.

The interchangeable antenna adapter module can be, fully or partially, arranged or accommodated in the at least one accommodation recess of the base module. In particular, the interchangeable antenna adapter module can be arranged or accommodated in the at least one accommodation recess between the bottom of the accommodation recess and the plate shaped antenna element. Alternatively, the interchangeable antenna adapter module can be partially arranged or accommodated in the at least one accommodation recess of the base module and partially arranged or accommodated in the at least one opening of the base module.

The interchangeable antenna adapter module can be free of any electrical component. Alternatively, the interchangeable antenna adapter module can comprise further electronical components. The further electronical components can be means for providing or allowing at least one power and/or data connection between the at least one plate shaped antenna element and the aircraft. Specifically, the further electronical components can be electronical adapter components and/or components of the at least one plate shaped antenna. For instance, electronical adapter components can be an antenna facing power and/or data interface configured for providing connectivity (power and data) to the at least one plate shaped antenna element being arranged on the interchangeable antenna adapter module and/or an aircraft facing power and/or data interface configured for providing connectivity (power and data) to the aircraft. The antenna facing power and/or data interface can be arranged in the antenna localization area or neighboured to the antenna localization area but is not limited thereto. The aircraft facing power and/or data interface can be arranged on the top surface, bottom surface and/or the at least one sidewall of the interchangeable antenna adapter module. Alternatively, the aircraft facing power and/or data interface can be arranged at the end of a cable such that the aircraft facing power and/or data interface can be connected or coupled to the power and/or data interface. For instance, electronical antenna components can be an antenna power supply, an antenna control unit, an antenna modem manager and/or an antenna processor but is not limited thereto. The electronical antenna components can be arranged on the top surface, bottom surface and/or the at least one sidewall of the interchangeable antenna adapter module. The antenna facing power and/or data interface can comprise contacts, a plug, a socket or a combination thereof being compatible and connectable with the contacts, plug, socket or a combination thereof of the at least one plate shaped antenna element. The aircraft facing power and/or data interface can comprise a plug, a socket or a combination thereof being compatible and connectable with the plug, socket or combination thereof of the power and/or data interface.

Alternatively or additionally, the aircraft facing power and/or data interface can be a wireless interface being compatible and connectable to the power and/or data interface. For instance, the interchangeable antenna adapter module, in particular the aircraft facing power and/or data interface, can comprise a wireless power receiver element like a power induction coil for receiving power from the power and/or data interface. Additionally, the interchangeable antenna adapter module, in particular the aircraft facing power and/or data interface, can comprise a wireless data communication element using WLAN, Bluetooth, NFC, RFID but is not limited thereto. The wireless data communication element can be configured for transmitting and/or receiving wireless data signals from the power and/or data interface.

The interchangeable antenna adapter module can be made of a material having a sufficient stability for holding the at least one plate shaped antenna element securely. Additionally, the interchangeable antenna adapter module can be made of a material having a hight thermal conductivity for transferring away heat from the at least one plate shaped antenna element and/or for providing as sufficient stability even at high temperatures to hold the at least one plate shaped antenna element securely. For instance, the material of the interchangeable antenna adapter module can be aluminium but is not limited thereto. Additionally or alternatively to the material having a hight thermal conductivity, the interchangeable antenna adapter module can comprise one or more means for providing a controlled heat transfer from the at least one plate shaped antenna element to the base module. For instance, means for providing a controlled heat transfer can be heat pipes but are not limited thereto.

The at least one interchangeable antenna adapter module can comprise means for mechanically supporting the cover module at the at least one interchangeable antenna adapter module. For instance, the means for mechanically supporting the cover module can be longitudinal ribs, transverse ribs, a combination of longitudinal and transverse ribs and/or a comb structure being arranged on the top surface of the interchangeable antenna adapter module facing the cover module but is not limited thereto.

The at least one interchangeable antenna adapter module can be releasably, i.e. non-permanently, physically connected or mounted to the base module by releasable fixing means. For instance, releasable fixing means can be installation brackets or screws but are not limited thereto. Additionally or alternatively, the at least one interchangeable antenna adapter module can comprise mounting holes being arranged in areas outside of the antenna localization are for physically connecting or mounting the cover module through the mounting holes of the at least one interchangeable antenna adapter module to the base module.

The at least one interchangeable antenna adapter module can further have at least one of the following features:

The at least one interchangeable antenna adapter module can provide a structural attachment of the antennas, in particular the plate shaped antenna elements, to the common base module. This can reduce static and vibration loads.

The at least one interchangeable antenna adapter module can provide a maintenance feature. The maintenance feature can represent that a plate shaped antenna element can be removed and replaced with a pre-installed base module.

The at least one interchangeable antenna adapter module can provide a simplified installation by pre-installing the at least one plate shaped antenna element to the base module on a bench. After the pre-installation, the base element together with the at least one plate shaped antenna element can be installed on the fuselage. If the at least one plat shaped antenna needs special screws (special tools), torquing or tests this can be done on a bench. The installation on the mounting adapter (physically standing on the aircraft) can be provided with common and easy-to-use screws.

The at least one interchangeable antenna adapter module can be a corrosion (electrochemical) compatible interface between the base module and the at least one plate shaped antenna element. In this context, a corrosion protection can be provided while managing electrical bonding.

The at least one interchangeable antenna adapter module can provide or include an electrical bonding and grounding path to the antenna. By including an electrical bonding and grounding path to the antenna static discharge can be provided and/or lightning direct effects can be compensated.

The at least one interchangeable antenna adapter module can provide a wiring support (routing). The wiring support can be tailored to the used plate shaped antenna element, in particular to the connector locations, and to the needs.

The at least one interchangeable antenna adapter module can include a thermal interface. The thermal interface provides a conductive heat transfer from antenna hot spots and cools for the entire bottom surface of the plate shaped antenna element. This activates the common base module (by conductive routing of the antenna heat) for cooling.

The at least one interchangeable antenna adapter module can include an antenna part identification. This antenna part identification can represent a label being located on the bottom side of the plate shaped antenna element. An antenna part identification can be used if the identification of the plate shaped antenna element not visible on the antenna itself.

The at least one interchangeable antenna adapter module can include lifting handles and features (like hoise points) for installation.

The at least one interchangeable antenna adapter module can include mechanical alignment features to ensure correct and tolerance tight installation.

The at least one interchangeable antenna adapter module can provide an installation Keying, i.e. a mechanical feature prohibiting the installation of the wrong component, e.g. the wrong plate-to-antenna or the wrong assy-to-baseplate. This can help to manage future incompatible evolutions (only backward or forward compatibility).

The cover module can be a module configured for at least partially, i.e. partially or fully, covering, in particular only covering, the base module and/or the at least one interchangeable antenna adapter module. For instance, the cover module can be configured for covering all sections of the base module and covering all sections of the at least one interchangeable antenna adapter module being free of or not covered by the at least one plate shaped antenna element. In case the cover module partially covers the base module, the level of coverage, i.e. the area ratio of an area of the cover module to an area of the base module, can be in a range of 80 to 98%, preferably about 95%.

The cover module can be provided in the shape of an aerodynamic cover. In other words, the cover module can have an aerodynamic and/or streamlined shape. The aerodynamic and/or streamlined shape of the cover module can be provided by using an appropriate shape of the upper surface and/or the at least one sidewall of the cover module. The cover module can usually comprise a lower surface, an upper surface and at least one sidewall.

The lower surface of the cover module can represent the surface of the cover module facing the base module, in particular the top surface of the base module, such that the lower surface at least partially corresponds to the top surface of the base module. Additionally, the lower surface of the cover module can represent the surface of the cover module being fully or partially in direct contact with the top surface of the base module in the connected or mounted state. The lower surface of the cover module can be fully or partially parallel to the top surface of the base module. The lower surface of the cover module may be parallel to the upper surface of the cover module (at least partially).

The upper surface of the cover module can represent the surface of the cover module being spaced apart and facing away from the lower surface of the cover module. The upper surface can, at least in part, be parallel to the top surface of the base module, the fuselage, and/or the lower surface of the cover module.

The at least one sidewall of the cover module can be a wall physically connecting the lower surface and the upper surface of the cover module. The at least one sidewall can comprise a continuous or non-continuous shape in vertical cross-section. In case the at least one sidewall comprises a continuous shape, the at least one sidewall can extend continuously perpendicular, rounded with an arc in the range of 1° to 45°, or inclined with an angle in the range of 1° to 89° from the lower surface to the upper surface. Alternatively, in case the at least one sidewall comprises a non-continuous shape, the at least one sidewall can be divided into at least two vertical extending sidewall sections. The at least two vertical extending sidewall sections can be different to each other in shape, i.e. perpendicular, rounded or inclined extension, and/or may be identical or different to each other in vertical size, i.e. height. For instance, in case the at least two vertical extending sidewall sections represent two sidewall sections being arranged one above the other, the height of the sidewall section contacting the lower surface of the cover module can be larger than, smaller than or equal to the height of the sidewall section contacting the top surface of the cover module. Additionally, the used shape of the sidewall or the at least two vertical extending sidewall sections can differ depending on whether a horizontal portion of the sidewall or the sidewall sections is aligned in the direction of flight of the aircraft (i.e. leading edge), parallel to the direction of flight of the aircraft or against the direction of flight of the aircraft. Alternatively, all horizontal portions of the at least one sidewall or of the at least two sidewall sections can be identical to each other. For instance, when the horizontal portion of the sidewall is aligned in the direction of flight of the aircraft, this horizontal portion of the sidewall can consist of two vertical extending sidewall sections, wherein both vertical extending sidewall sections have the same vertical size. One of the two vertical extending sidewall sections, in particular the sidewall section contacting the lower surface of the cover module, extends perpendicular. The other vertical extending sidewall section, in particular the sidewall section contacting the upper surface of the cover module, extends continuously inclined with an angle of approximately 45°. Additionally, when the horizontal portions of the sidewall are parallel to and/or being against the direction of flight of the aircraft, these horizontal portions of the sidewall consist of a continuous shape, in particular is continuously rounded with an arc of approximately 45°.

The cover module can comprise at least one opening. The at least one opening can be configured to fully or partially receive or accommodate the at least one plate shaped antenna element. Additionally, the at least one opening can be configured for accommodating or receiving the at least one plate shaped antenna element in such a manner that at least one part of the least one plate shaped antenna element is at least partially exposed to the outside. The cover module and the opening of the cover module can be dimensioned such that the at least one plate shaped antenna element, in particular the at least one part of the least one plate shaped antenna element being at least partially exposed to the outside, is flush with the upper surface of the cover module. Alternatively, the cover module and the opening of the cover module can be dimensioned such that the at least one plate shaped antenna element, in particular the at least one part of the least one plate shaped antenna element being at least partially exposed to the outside, is shifted to the inside, i.e. to the internal volume, of the opening of the cover module. By exposing the least one plate shaped antenna element to the outside, in particular environment around the aircraft, the antenna efficiency can be increased. Advantageously, by exposing the least one plate shaped antenna element to the outside, an additional antenna cover is not necessary such that the height and weight of the set for a modular antenna arrangement can be (further) reduced.

The opening of the cover module can be free of any holding elements and/or supporting elements which are configured holding and/or supporting the at least one plate shaped antenna element. In other words, the at least one plate shaped antenna element can be only held and/or supported by the interchangeable antenna adapter module. The opening extends from a top surface of the cover module to a bottom surface of the cover module and vice versa. In other words, the opening can be a through hole having a constant diameter. The opening can comprise at least one sidewall. The at least one sidewall of the opening can be a wall of the opening physically connecting the lower surface and the upper surface of the cover module. The at least one sidewall can comprise a continuous, i.e. extends perpendicular, or non-continuous shape in vertical cross-section. The at least one opening can comprise a quadratic, circular, elliptic, rectangular, or polygonal (cross-sectional) shape but is not limited thereto. The cross-section of the at least one opening can be adapted to a cross-section of the at least one plate shaped antenna element.

The at least one opening of the cover module can be aligned with at least one accommodation recess of the base module. In other words, the at least one opening can only be provided or located in regions of the cover module which are above the at least one accommodation recess of the base module. In case the at least one opening represents more than one opening, the plurality of openings can be identical or different to each other in length, width and/or cross-sectional shape. An area ratio of the area of the at least one opening, i.e. sum of the areas of the one or more openings, to the area of the lower surface of the cover module can be in the range of 20% to 95%, preferably about 55%. In case no antenna element is arranged in an opening, the opening can be filled with a removable filler and/or closed with a closure element. In case, the cover module comprises a plurality of openings, each one of the plurality of openings or only a certain number of the plurality of openings can accommodate at least one plate shaped antenna element. However, it is not required for the cover module to always accommodate or receive a plate shaped antenna element.

The opening of the cover module an comprise a sealing element for sealing or closing a gap between a sidewall of the opening and the plate shaped antenna element accommodated in the opening.

The cover module can be free of any electronical components. Alternatively, the cover module can comprise further electronical components. For instance, further electronical components can be a camera laser-optics or sensors, in particular sensors measuring weather parameter, but is not limited thereto.

The cover module can include or be made of aluminium, glass fibre, carbon fibre, polyurethan or polyethylene but is not limited thereto. The used material for the cover module can have radio wave shielding properties. Alternatively or additionally, the used material for the cover module having no or only inappropriate radio wave shielding properties can include an ingredient or a coating having appropriate radio wave shielding properties. For instant, the coating or ingredient can be made of polypropylene or polyurethan but is not limited thereto. Additionally, the cover module can comprise shielding elements configured for shielding each of the at least one included plate shaped antenna elements from each other. Such shielding provides that the transmitted and received radio waves of each one of the plate shaped antenna elements included in the at least one opening of the cover module do not affect and/or interfere with each other or at least reduces such effects. The cover module can be made of a single piece of material. Alternatively, the cover module can comprise a housing or casing having disposed in the interior or volume thereof means for mechanically supporting the cover module. For instance, the means for mechanically supporting the cover module can be a filler material, longitudinal ribs, transverse ribs, a combination of longitudinal and transverse ribs and/or a comb structure but is not limited thereto. For instance, the filler material can be a syntactic foam but is not limited thereto. By providing the means for mechanically supporting the cover module, a sufficient strength of the cover can be provided and at the same time the weight of the cover and the amount of material used can be reduced. In this context, the higher number of means for mechanically supporting the cover module used, the thinner (in material thickness of the housing or casing) the cover module can be made. Summarized, the cover module can be made of a material and/or structure having light weight but a high resistance to a deformation due to decompression. The used material and/or structure of the cover module can be identical or different to the used material and/or structure of the base module. Additionally, the used material and/or structure of the cover module can fulfil safety regulations regarding a protection against bird strikes, sand erosion, rain erosion and/or hail. Additionally, the used material and/or structure of the cover module can fulfil safety regulations regarding a protection against lightning strikes. For instance, the cover module can include at least one lightning capable grounding or bonding provision but is not limited thereto.

The cover module can be releasably, i.e. non-permanently, physically connected or mounted to the base module by one or more fasteners. Additionally, the cover module can be releasably, i.e. non-permanently, physically connected or mounted to the at least one interchangeable antenna adapter module, in particular a section of the at least one interchangeable antenna adapter module being free of a plate shaped antenna element, by one or more fasteners. Exemplary, the fasteners can be screws, rivets or bolts but are not limited thereto. One or more sealing elements can be arranged between the contacting surfaces of the cover module and the base module in order to provide a sealing of the gap between the cover module and the base module.

The cover module can comprise a plate shape. The cover module can usually comprise a length, width, and a height. A height-length ratio of the cover module can be is in the range of 1 to 15%, preferably about 5%. Additionally or alternatively, a height-width ratio of the cover module can be in the range of 1 to 25%. The cover module can comprise a quadratic, circular, elliptic, rectangular, or polygonal (cross-sectional) shape but is not limited thereto. The (cross-sectional) shape of the of the cover module can be identical or different to the shape of the base module.

The cover module can comprise a smaller height than the height of the base module. In other words, the ratio of a height of the cover module to the height of the base module can be in a range of 10 to 40%, preferably about 33%. The height ratio of the height of the cover module to the sum of the height of the base module and the height of the cover module can be in a range of 1% to 49%, preferably about 34%.

The plate shaped antenna element can be a single one-piece antenna element or an assembly of a plurality of separate antenna elements for emitting and/or receiving radio waves. For instance, the plate shaped antenna element can be a single or plurality of antenna elements or an active or passive electrically steerable antenna (ESA), for all kind of services like GNSS (GPS, Galileo, etc.) satellite communication in all types of orbits (mostly LEO, GEO) mostly but not limited to Ku/Ka-band. The plate shaped antenna element can have a height of 0.01 to 0.2 m, preferably about 0.1 m, but is not limited thereto. The plate shaped antenna element can comprise a quadratic, circular, elliptic, rectangular, or polygonal (cross-sectional) shape but is not limited thereto. The plate shaped antenna element can have an area of 0.01 m x 0.01 m to 2 m x 2 m, preferably about 0.6 m x 0.6 m, but is not limited thereto. The (cross-sectional) shape of the plate shaped antenna element can correspond to the (cross-sectional) shape form of the at least one opening in the cover module. The plate shaped antenna element can be dimensioned in such a manner that the plate shaped antenna element fully or partially fills the at least one opening in the cover module. An area ratio between an area of the at least one plate shaped antenna element to an area of the cover module can be in a range of 40 to 90%, preferably about 50%.

In case the at least one plate shaped antenna represents more than one plate shaped antenna, the plurality of plate shaped antennas can be identical or different to each other in type, height, length, width and/or (cross-sectional) shape. Additionally or alternatively, in case the at least one plate shaped antenna may represent more than one plate shaped antenna, the at least one opening of the cover module may present more than one opening, and the at least one accommodation recesses of the base module may represent more than one accommodation recess, each one of the plurality of plate shaped antenna elements can be arranged in an own or respective one of the plurality of accommodation recesses being aligned with the openings.

The power and/or data interface can be an interface or connection configured for providing connectivity to at least one plate shaped antenna element and the aircraft. Specifically, the power and/or data interface can represent an interface or connection configured for connecting or coupling two electrical conductors and/or two signal lines to each other, respectively. The signal lines can be optical or electrical signal lines but are not limited thereto. The power and/or data interface can comprise a plug and/or a socket but is not limited thereto. For instance, the power and/or data interface can be a plug and/or a socket of a bulkhead connector but is not limited thereto. Alternatively, the power and/or data interface can be a wireless interface. For instance, the power and/or data interface can comprise a wireless power transfer element like a power transmission coil for providing power to the at least one plate shaped antenna element. Additionally, the wireless power and/or data interface can comprise a wireless data communication element using WLAN, Bluetooth, NFC, RFID but is not limited thereto. The wireless data communication element can be configured for transmitting wireless data signals to and/or receiving wireless data signals from the at least one plate shaped antenna element.

The power and/or data interface can be arranged at an end of a cable that extends from inside of the aircraft. In this context, the power and/or data interface can be arranged in or at / included in the base module, in particular in the top surface of the base module or the bottom of the at least one accommodation recess. Alternatively, the power and/or data interface can be included or comprised in the at least one interchangeable antenna adapter module being arranged between the at least one plate shaped antenna element and the aircraft, in particular in the accommodation recess of the base module. In this context, the cable can extend through the cable passage of the base module. Alternatively, the power and/or data interface can be arranged in the fuselage or on the fuselage, in particular the outer surface of the fuselage, of the aircraft. In this context, the at least one interchangeable antenna adapter module can be connected by wire via the cable passage to the power and/or data interface. The number of provided power and/or data interfaces can correspond to the number of accommodation recesses in the base module such that each accommodation recess is provided with an own or respective access to the power and/or data interface.

The power and/or data interface can be secured against corrosion by hermetically or watertight sealing the connectors or signal lines in the power and/or data interface. Additionally or alternatively, the power and/or data interface can be protected against electromagnetic interferences by using a cable shielding which can occur while the aircraft is struck by lightning or flying debris due to a storm. Additionally or alternatively, the power and/or data interface can be protected against unintentional disconnection due to vibrations and/or impacts by means of mechanical protection mechanisms but is not limited thereto.

The power and/or data interface can be coupled to a plurality of internal aircraft units. For instance, the power and/or data interface can be electrically coupled to an aircraft server, an aircraft power supply, a flight attendant panel, FAP, a wireless access points, WAPs, a WiFi providing unit, a Hyper connected air traffic management system, HCATM, and/or cabin systems and aircraft systems like Air data inertial reference unit, ADIRU, but is not limited thereto, such that in-flight entertainment, IFA, can be provided. The aircraft server can be a server having a processor and at least one memory.

In a preferred embodiment, the cover module is configured for at least partially covering the base module and the at least one interchangeable antenna adapter module. The cover module can be configured for at least partially or fully covering the base module and the at least one interchangeable antenna adapter module insofar as it is not covered by the at antenna module. For example, the at least one interchangeable antenna adapter module can have a larger base area or horizontal cross section than the antenna element to be mounted thereon. In this case, the cover module can also provide covering of the parts of the antenna adapter module protruding (in horizontal direction) from under the antenna element.

In a preferred embodiment, the at least one interchangeable antenna adapter module and the cover module comprise means for mechanically supporting the cover module at the at least one interchangeable antenna adapter module. The means for mechanically supporting the cover module can be a filler material, longitudinal ribs, transverse ribs, a combination of longitudinal and transverse ribs and/or a comb structure being arranged in the interior of the cover module. By including means for mechanically supporting the cover module in the cover module and/or the at least one interchangeable antenna adapter module, a sufficient strength of and/or support for the cover can be provided so that the weight of the cover and/or the amount of material used can be reduced.

In a preferred embodiment, the base module and/or the at least one interchangeable antenna adapter module comprises means for providing or allowing at least one power and/or data connection between the at least one plate shaped antenna element and the aircraft.

In a preferred embodiment, the at least one interchangeable antenna adapter module comprises at least one power and/or data interface between the at least one plate shaped antenna element and the aircraft.

In a preferred embodiment, the at least one interchangeable antenna adapter module comprises means for mechanically aligning the at least one plate shaped antenna element with the base module. By providing means for mechanically aligning the at least one plate shaped antenna element, a movement or a shifting of the at least one plate shaped antenna element during an assembling of the set for a modular antenna arrangement or during the use of the set of the modular antenna arrangement can be significantly reduced or prevented. This can increase the effectivity of the at least one plate shaped antenna elements.

In a preferred embodiment, the at least one interchangeable antenna adapter module comprises means for providing a controlled heat transfer from the at least one plate shaped antenna element to the base module. By including means for providing a controlled heat transfer from the at least one plate shaped antenna element to the base module, heat provided by the at least one plate shaped antenna element can be transferred to the base module acting as a heat sink. This can provide a reliable cooling of the at least one plate shaped antenna element such that an overheating of the at least one plate shaped antenna element can be prevented and the lifetime of the at least one plate shaped antenna element can be increased.

The means for providing a controlled heat transfer from the at least one plate shaped antenna element to the base module can, e.g., be configured, shaped, or arranged to direct the heat transfer into or along one or more predetermined (predefined) orientations, paths and/or areas. The means for providing a controlled heat transfer can include material bridges intended for promoting heat transfer. The means for providing a controlled heat transfer can include one or more (cooling) channels which can at least partially or fully be filled with a liquid or fluid, preferably a heat transfer liquid or fluid. The means for providing a controlled heat transfer can include one or more heat pipes which can advantageously be distributed and/or oriented in a predefined manner. The at least one interchangeable antenna adapter module can, e.g., be manufactured with additive manufacturing (e.g. 3d printing). Thereby, the structure and/or shape of the interchangeable antenna adapter module can be adapted to specific and/or predetermined heat dissipation properties. For example, one or more cooling channels can be integrated into the body of the interchangeable antenna adapter module during the (additive) manufacturing thereof.

In a preferred embodiment, the at least one interchangeable antenna adapter module and/or the cover module is/are dimensioned so that the at least one plate shaped antenna element is flush with an upper surface of the cover module. Providing the at least one plate shaped antenna element to be flush with the upper surface of the cover module, the drag of the fuselage is not substantially or significantly increased by the set for a modular antenna arrangement and that the set for a modular antenna arrangement, in particular the at least one plate shaped antenna element, is not acted upon by increased or substantially increased aero loads. For example, in case of a higher or thicker plate shaped antenna element, the antenna adapter module can be provided lower or thinner and/or the cover module can be provided higher or thicker.

In a preferred embodiment, the at least one accommodation recess comprises a first accommodation recess for accommodating, at least partially, a first plate shaped antenna element and a second accommodation recess for accommodating, at least partially, a second plate shaped antenna element. The first accommodation recess and the second accommodation recess can be of similar, identical or different size. The first accommodation recess and the second accommodation recess can be of similar, identical or different shape or cross-section. The first plate shaped antenna element and the second plate shaped antenna element can be of similar, identical or different size, shape or cross-section.

In a preferred embodiment, the at least one interchangeable antenna adapter module comprises a first antenna adapter module adapted to the first plate shaped antenna element and a second antenna adapter module adapted to the second plate shaped antenna element. The first antenna adapter module and the second antenna adapter module can be of similar, identical or different size. The first antenna adapter module and the second antenna adapter module can be of similar, identical or different size, shape or cross-section.

In a preferred embodiment, the at least one opening comprises a first opening adapted to a (horizontal) cross-section of the first plate shaped antenna element and a second opening adapted to a (horizontal) cross-section of the second plate shaped antenna element.

In a preferred embodiment, the cover module is shaped in a streamline form to provide an aerodynamic cover. By providing the cover module as an aerodynamic cover, the drag of the fuselage is not substantially or significantly increased by the set for a modular antenna arrangement and/or that the set for a modular antenna arrangement is not acted upon by substantially or significantly increased aero loads.

In another aspect of the invention, a method for assembling a set for a modular antenna arrangement is presented. The method comprises at least the following steps: connecting the at least one interchangeable antenna adapter module to the base module, connecting at least one plate shaped antenna element to the at least one interchangeable antenna adapter module, and connecting the cover module to the base module.

In another aspect of the invention, an aircraft component is presented. The aircraft component comprises a set for a modular antenna arrangement as described above and one or more plate shaped antenna elements connected to the interchangeable antenna adapter module.

In another aspect of the invention, an aircraft is presented. The aircraft comprises the set for a modular antenna arrangement as described above and/or the aircraft component as described above.

Aspects of the invention are explained in greater detail below with reference to the figures, in which one illustrative embodiment is illustrated.
FIG. 1 shows a schematic perspective view of an aircraft having a set for a modular antenna arrangement for an aircraft according to the invention,
FIG. 2 shows a schematic cross-sectional view of the set for a modular antenna arrangement in a non-mounted state,

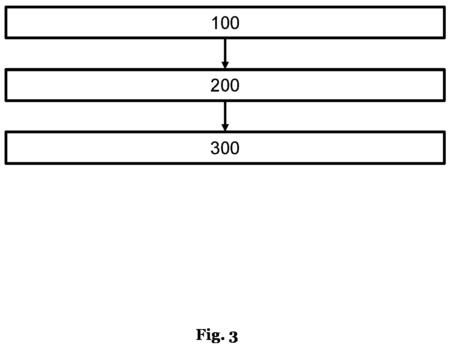

FIG. 3 shows method for assembling a set for a modular antenna arrangement.

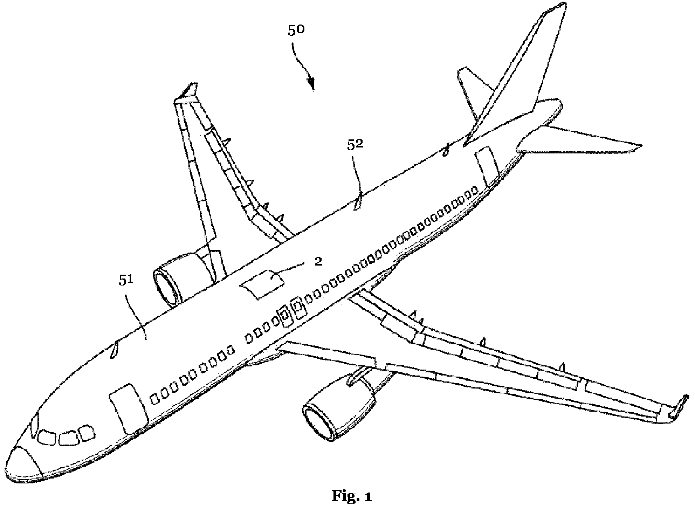

The aircraft 50 shown in FIG. 1 has a fuselage 51 and a set 1 for a modular antenna arrangement 2 according to an embodiment of the invention. In addition to the set 1 for a modular antenna arrangement 2, conventional blade antennas 52, which are secured externally on the fuselage 51 and also project outwards from the fuselage 51, are also shown for purposes of illustration. In FIG. 1, the set 1 for a modular antenna arrangement 2 is arranged on the upper side of the fuselage 51, by way of example. However, it is also possible for the set 1 for a modular antenna arrangement 2 to be situated or located at any other point on the fuselage 51, e.g. on one side or on the underside.

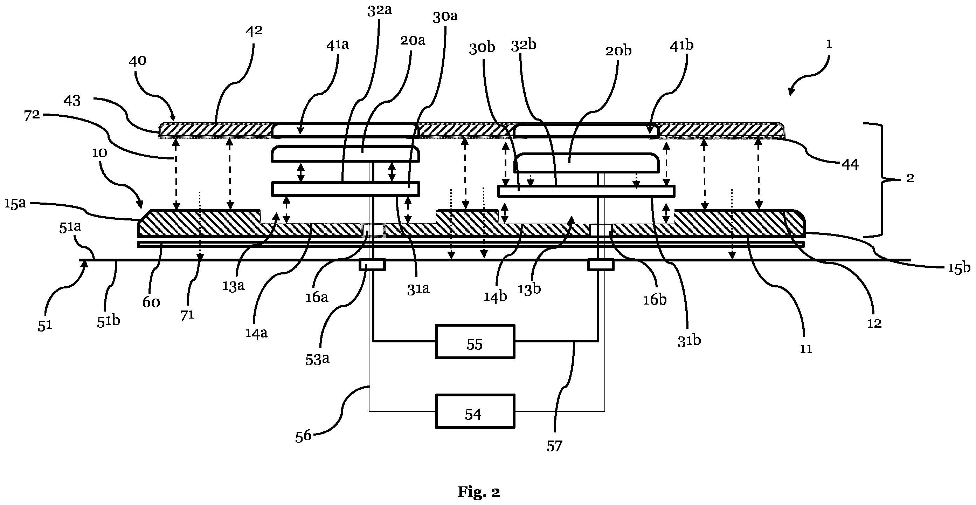

As shown in Fig. 2, the set 1 for a modular antenna arrangement 2 for an aircraft 50, comprises a base module 10, two interchangeable antenna adapter module 30a and 30b, and a cover module 40.

The base module 10 comprises a bottom surface 11, a top surface 12, and a sidewall 15. The bottom surface 11 of the base module 10 is the surface of the base module 10 facing the fuselage 51, in particular the outer surface 51a of the fuselage 51, of an aircraft 50. A mounting adapter 60 is arranged between the bottom surface 11 of the base element 10 and the outer surface 51a of the fuselage 51 such that the bottom surface 11 of the base module 10 is neighboured to the fuselage 51. The outer surface 51a of the fuselage 51 is parallel to the inner surface 51b of the fuselage 51. The base module 10 is non-releasably connected by a non-releasable connection 71 like a rivet through the mounting adapter 60 to the fuselage 51. The top surface 12 of the base module 10 comprises two accommodation recesses 13a and 13b. Each one of the accommodation recesses 13a and 13b extends from the top surface 12 of the base element 10 in the direction to the bottom surface 11 of the base module 10. Each one of the two accommodation recesses 13a and 13b extends into the base module 10 with a depth of about 50% of the height of the base module 10. Each one of the two accommodation recesses 13a and 13b comprises a bottom 14a and 14b, respective. The sidewall 15a of the base module 10 aligned in the direction of flight has a non-continuous shape consisting of two sections being arranged on each other, wherein one section extends perpendicular and the other section extends inclined with an angle of approximately 45°. The sidewall 15b of the base module 10 aligned against the direction of flight has a continuous shape being continuously rounded with an arc of approximately 45°. A first cable passage 16a extends from the bottom surface 11 of the base module 10 to the bottom 14a of the first accommodation recess 13a. A second cable passage 16b extends from the bottom surface 11 of the base module 10 to the bottom 14b of the second accommodation recess 13b.

The first accommodation recess 13a accommodates a first interchangeable antenna adapter module 30a. The first interchangeable antenna adapter module 30a is releasably mounted on its bottom surface 31a to the first accommodation recess 13a, in particular on the bottom 14a of the first accommodation recess 13a, by a releasably connection 72 like screws. The first interchangeable antenna adapter module 30a partially fills the first accommodation recess 13a. A first plate shaped antenna element 20a is releasably mounted on the top surface 32a of the first interchangeable antenna adapter module 30a. The first plate shaped antenna element 20a fully covers the top surface 32a of the first interchangeable antenna adapter module 30a.

The second accommodation recess 13b accommodates a second interchangeable antenna adapter module 30b. The second interchangeable antenna adapter module 30b is releasably mounted on its bottom surface 31b to the second accommodation recess 13b, in particular on the bottom 14b of the second accommodation recess 13b, by a releasably connection 72 like screws. The second interchangeable antenna adapter module 30b partially fills the second accommodation recess 13b. The first interchangeable antenna adapter module 30a is different, in particular in length and height, to the second interchangeable antenna adapter module 30b. A second plate shaped antenna element 20b is non-releasably mounted on the top surface 32b of the second interchangeable antenna adapter module 30b. The second plate shaped antenna element 20b partially covers the top surface 32b of the second interchangeable antenna adapter module 30b. The second plate shaped antenna element 20b is at least partially accommodated in the second accommodation recess 13b. The first plate shaped antenna element 20a and the second plate shaped antenna element 20b are different, in particular in type, length and height, to each other.

The cover module 40 comprises an upper surface 42, a lower surface 44, and a sidewall 43. The lower surface 44 of the cover module 40 is the surface of the cover module 40 facing the base module 10, in particular the top surface 12 of the base module 10. The cover module 40 comprises two openings 41a and 41b. each one of the two openings 41a and 41b extends with a continuous shape from the upper surface 42 to the lower surface 44 or vice versa. The cover module 40 comprises a plate shaped, wherein the upper surface 42 is parallel to the lower surface 44 and the sidewall 43 has a continuous shape being continuously rounded with an arc of approximately 45°. Therefore, the cover module 40 comprises a streamline form such that the cover module 40 represents an aerodynamic cover.

In a mounted state, the first plate shaped antenna element 20a fully fills the first opening 41a of the cover module 40. Additionally, the second plate shaped antenna element 20b fully fills the second opening 41b of the cover module 40. Both the first plate shaped antenna element 20a and the second plate shaped antenna element 20b are at least partially exposed to the outside by the openings 41a and 41b, respective, and are flush with the upper surface 42 of the cover module 40. The

The cover module 40 is releasably mounted by a releasably connection 72 like screws to the base module 10, in particular top surface 12 of the base module 10, and is also releasably mounted by a releasably connection 72 like screws to the second interchangeable antenna adapter module 30b. In this context, the cover module 40 is releasably mounted by a releasably connection 72 like screws to an edge of the second interchangeable antenna adapter module 30b surrounding the second plate shaped antenna element 20b, wherein the edge is free of the second plate shaped antenna element 20b. By connecting cover module 40 to the interchangeable antenna adapter module 30a or 30b, a pressure is applied to the plate shaped antenna elements 20a and 20b such that the plate shaped antenna elements 20a and 20b are flush with the upper surface 42 of the cover module 40.

The first plate shaped antenna element 20a is directly connected to the first interchangeable antenna adapter module 30a. The first interchangeable antenna adapter module 30a is connected by wire to a first power and/or data interface 53a. The wire or cable providing connectivity from the first interchangeable antenna adapter module 30a to the first power and/or data interface 53a extends through the first cable passage 16a.

The second plate shaped antenna element 20b is directly connected to the second interchangeable antenna adapter module 30b. The second interchangeable antenna adapter module 30b is connected by wire to a second power and/or data interface 53b. The wire or cable providing connectivity from the second interchangeable antenna adapter module 30b to the second power and/or data interface 53b extends through the second cable passage 16b.

The first and second power and/or data interfaces 53a and 53b are both arranged within the fuselage 51 of the aircraft 50. Both first and second power and/or data interfaces 53a and 53b comprises both electrical conductors and signal lines. The signal lines are optical and/or electrical signal lines. The first and second power and/or data interfaces 53a and 53b can be bulkhead connectors. The first and second power and/or data interfaces 53a and 53b are coupled by cables 56 and 57 to a plurality of internal aircraft units like an aircraft server 54 and an aircraft power supply 55. In this context, it can be pointed out that the internal aircraft units provide all the electrical power, computing, and communication that the first and second plate shaped antenna elements 20a and 20b included in the set 1 for a modular antenna arrangement 2 require to function reliably.

The method for assembling a set 1 for a modular antenna arrangement 2 shown in FIG: 3 comprises three steps. In a first step 100, the at least one interchangeable antenna adapter module 30a, 30b is connected to the base module 10. In this context, the at least one interchangeable antenna adapter module 30a, 30b is releasably mechanically connected to the base module 10, in particular the at least one accommodation recess 13a, 13b of the base module 10. In a second step 200, at least one plate shaped antenna element 20a, 20b is connected to the at least one interchangeable antenna adapter module 30a, 30b. In this context, the at least one plate shaped antenna element 20a, 20b is mechanically and electrically connected to the at least one interchangeable antenna adapter module 30a, 30b. Alternatively, the first and second step 100 and 200 can be exchanged (not shown). In an method having an exchanged first and second step 100 and 200, first - the at least one plate shaped antenna element 20a, 20b is mechanically and electrically connected to the at least one interchangeable antenna adapter module 30a, 30b - and second - the at least one interchangeable antenna adapter module 30a, 30b is releasably mechanically connected together with the at least one plate shaped antenna element 20a, 20b to the base module 10, in particular the at least one accommodation recess 13a, 13b of the base module 10 -. In a third step 300, the cover module 40 is connected to the base module 10. In this context, the cover module 40 is releasably mechanically connected to the base module 10.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

## Claims

1. Set (1) for a modular antenna arrangement (2) for an aircraft (50), comprising:
a base module (10) for connecting at least one plate shaped antenna element (20a, 20b) with a fuselage (51) of the aircraft (50), wherein the base module (10) has a bottom surface (11) mechanically connectable with the fuselage (51) of the aircraft (50) and a top surface (12) comprising at least one accommodation recess (13a, 13b) for accommodating, at least partially, the at least one plate shaped antenna element (20a, 20b);
at least one interchangeable antenna adapter module (30a, 30b) connectable to the base module (10) and the at least one plate shaped antenna element (20a, 20b), wherein the interchangeable antenna adapter module (30a, 30b) is configured to be arranged in the accommodation recess (13a, 13b) between a bottom (14a, 14b) of the accommodation recess (13a, 13b) and the plate shaped antenna element (20a, 20b);
a cover module (40) configured for at least partially covering the base module (10), wherein the cover module (40) comprises at least one opening (41a, 41b), wherein an opening cross-section of the at least one opening (41a, 41b) is adapted to a cross-section of the at least one plate shaped antenna element (20a, 20b).

2. Set (1) for a modular antenna arrangement (2) according to claim 1, wherein the cover module (40) is configured for at least partially covering the base module (10) and the at least one interchangeable antenna adapter module (30a, 30b).

3. Set (1) for a modular antenna arrangement (2) according to claim 2, wherein the at least one interchangeable antenna adapter module (30a, 30b) and the cover module (40) comprise means for mechanically supporting the cover module (40) at the at least one interchangeable antenna adapter module (30a, 30b).

4. Set (1) for a modular antenna arrangement (2) according to any one of the preceding claims, wherein the base module (10) and/or the at least one interchangeable antenna adapter module (30a, 30b) comprises means for providing or allowing at least one power and/or data connection between the at least one plate shaped antenna element (20a, 20b) and the aircraft (50).

5. Set (1) for a modular antenna arrangement (2) according to any one of the preceding claims, wherein the at least one interchangeable antenna adapter module (30a, 30b) comprises at least one power and/or data interface between the at least one plate shaped antenna element (20a, 20b) and the aircraft (50).

6. Set (1) for a modular antenna arrangement (2) according to any one of the preceding claims, wherein the at least one interchangeable antenna adapter module (30a, 30b) comprises means for mechanically aligning the at least one plate shaped antenna element (20a, 20b) with the base module (10).

7. Set (1) for a modular antenna arrangement (2) according to any one of the preceding claims, wherein the at least one interchangeable antenna adapter module (30a, 30b) comprises means for providing a controlled heat transfer from the at least one plate shaped antenna element (20a, 20b) to the base module (10).

8. Set (1) for a modular antenna arrangement (2) according to any one of the preceding claims, wherein the at least one interchangeable antenna adapter module (30a, 30b) and/or the cover module (40) is/are dimensioned so that the at least one plate shaped antenna element (20a, 20b) is flush with an upper surface (42) of the cover module (40).

9. Set (1) for a modular antenna arrangement (2) according to any one of the preceding claims, wherein the at least one accommodation recess (13a, 13b) comprises a first accommodation recess (13a) for accommodating, at least partially, a first plate shaped antenna element (20a) and a second accommodation recess (13b) for accommodating, at least partially, a second plate shaped antenna element (20b).

10. Set (1) for a modular antenna arrangement (2) according to claim 9, wherein at least one interchangeable antenna adapter module (30a, 30b) comprises a first antenna adapter module (30a) adapted to the first plate shaped antenna element (20a) and a second antenna adapter module (30b) adapted to the second plate shaped antenna element (20b).

11. Set (1) for a modular antenna arrangement (2) according to any one of the preceding claims, wherein the at least one opening (41a, 41b) comprises a first opening (41a) adapted to a cross-section of the first plate shaped antenna element (20a) and a second opening (41b) adapted to a cross-section of the second plate shaped antenna element (20b).

12. Set (1) for a modular antenna arrangement (2) according to any one of the preceding claims, wherein the cover module (40) is shaped in a streamline form to provide an aerodynamic cover.

13. Method for assembling a set (1) for a modular antenna arrangement (2) according to any one of the preceding claims, comprising at least the following steps:
a) Connecting the at least one interchangeable antenna adapter module (30a, 30b) to the base module (10),
b) Connecting at least one plate shaped antenna element (20a, 20b) to the at least one interchangeable antenna adapter module (30a, 30b),
c) Connecting the cover module (40) to the base module (10).

14. Aircraft component comprising:
a set (1) for a modular antenna arrangement (2) according to any one of the claims 1 to 12, and one or more plate shaped antenna elements (20a, 20b) connected to the interchangeable antenna adapter module (30a, 30b).

15. Aircraft (50) comprising a set (1) for a modular antenna arrangement (2) according to any one of the claims 1 to 12 and/or the aircraft component according to claim 14.
